# EUROPEAN PATENT APPLICATION

(11) **EP 2 645 219 A1**
(43) Date of publication of application: **02.10.2013**
(21) Application number: 12305376.1
(22) Date of filing: 30.03.2012
(51) Int. Cl.: G06F 3/048

(54) **Method of and device for validation of a user command for controlling an application**

(71) Applicant: Orange, 75015 Paris (FR)
(72) Inventor: Faidy, Diane, LONDON, W149SR (GB); Verdi, Rajinder, BROMLEY, BR2 8NE (GB); Riera, Julien, 75015 PARIS (FR)
(74) Representative: Regimbeau

(57) **Abstract**

An electronic device comprising a display screen; a graphical user interface displayed on the display screen and comprising: a graphical object automatically movable, in accordance with a predefined movement, along at least part of the display screen, wherein the automatic movement of the graphical object is triggered in response to a user input; the predefined movement being such that the graphical object is translated in a first direction along the display screen from a first region of the display screen to a second region of the display screen, and movement from the first region to the second region is indicative of a user command being validated; the device further comprising sensor means configured to detect the movement of the graphical object from the first region to the second region; and an application processor configured to execute the user command in response to detection of the movement of the graphical object from the first region to the second region.

## Description

### Field of the Invention

The present invention relates in general to a method and device for validating a user command for controlling an application executing on a portable electronic device.

### Background of the Invention

As the number of software applications and services installed on portable electronic devices steadily increases and the applications become more and more complex, the design of user interfaces enabling ease of user interaction and enhancing user experience is becoming more and more challenging. Moreover, for applications where validations of commands have important consequences, it is becoming more important to ensure that command validations are not triggered inadvertently.

The present invention has been devised with the foregoing in mind.

### Summary of the Invention

Accordingly, a first aspect of the invention provides an electronic device comprising: a display screen; a graphical user interface displayed on the display screen and comprising: a graphical object automatically movable, in accordance with a predefined movement, along at least part of the display screen, wherein the automatic movement of the graphical object is triggered in response to a user input; the predefined movement being such that the graphical object is translated in a first direction along the display screen from a first region of the display screen to a second region of the display screen, and movement from the first region to the second region is indicative of a user command being validated; the device further comprising sensor means configured to detect the movement of the graphical object from the first region to the second region; and an application processor configured to execute the user command in response to detection of the movement of the graphical object from the first region to the second region.

The method and devices according to aspects of the invention help to facilitate user interaction and to enhance user experience for execution of user. The electronic device may be, for example, a portable electronic communication device such as a portable computer, a smart phone or the like.

The sensor means may be configured to detect the graphical object reaching the second region and/or to detect the distance of movement of the graphical object.

In particular embodiments, the display screen is a touch sensitive display operable to detect one or more user contact gestures with the surface of the touch screen display and the graphical object is a user interface graphical object wherein the sensor means is configured to detect a user contact gesture of a region of the display screen corresponding to the graphical interface object to trigger the automatic movement of the graphical object.

The user contact gesture may be directly with a user digit such as a finger or thumb, or indirectly by means of a pointer object such as a stylus pen etc. In other embodiments, the second object may be moved by other user control means such as for example a joystick type control, a control wheel, track ball etc.

In an embodiment, the sensor means is configured to detect a user drag gesture along the display screen in a second direction opposite to the first direction to trigger the automatic movement of the graphical interface object in the first direction.

In an embodiment, the sensor means is configured to detect a user drag gesture of the graphical object in the second direction along a predetermined distance.

In an embodiment, the graphical interface comprises a second graphical object which appears on the display in response to the automatic movement of the graphical object, the second graphical object being displayed such that that more of the second graphical object appears on the display as the first graphical object moves in the first direction. For example the second graphical object may be displayed to under lie the first graphical object such that it is uncovered by movement of the first graphical object or the second graphical object may be displayed to extend from the first graphical object such that s movement of the first graphical object scrolls the second graphical object to the display screen.

In an embodiment, the automatic movement of the graphical object creates a space portion on the display screen displaying a further graphical object representative of the state of execution of the user command.

In an embodiment, the graphical object is a web page displaying data content, the user command being a refresh command to refresh the data content of the web page.

In an embodiment, the second graphical object is representative of a web page displaying the updated data content.

In an embodiment, in the application processor is configured to enable wireless transmission of data representative of the user command from the portable electronic device to a remote server once validation of the command has been detected

In an embodiment, the user command is representative of an agreement to pay for a product or service

According to a second aspect of the invention, there is provided a computer implemented method for validating a user command for controlling an application, the method comprising: displaying on a display screen of an electronic device a graphical user interface comprising a graphical object automatically movable, in accordance with a predefined movement, along at least part of the display screen, triggering the automatic movement of the graphical object in response to a user input, the predefined movement being such that the graphical object is translated in a first direction along the display screen from a first region of the display screen to a second region of the display screen, and movement from the first region to the second region is indicative of a user command being validated; detecting the movement of the graphical object from the first region to the second region; and executing the user command in response to detection of the movement of the graphical object from the first region to the second region.

In an embodiment, the display screen is a touch sensitive display operable to detect one or more user contact gestures with the surface of the touch screen display and, the method comprises detecting a user contact gesture of a region of the display screen corresponding to the graphical interface object to trigger the automatic movement of the graphical object, the user contact gesture being a user drag gesture along the display screen in a second direction opposite to the first direction.

At least parts of methods according to the invention may be computer implemented. The methods may be implemented in software on a programmable apparatus. They may also be implemented solely in hardware or in software, or in a combination thereof.

Since some parts of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### Brief Description of the Drawings

Embodiments of the invention will now be described, by way of example only, and with reference to the following drawings in which:-
Figure 1 is a schematic diagram of a network in which one or more embodiments of the invention may be implemented;
Figure 2 is a schematic diagram of a portable electronic communication device according to at least one embodiment of the invention;
Figure 3 is a block diagram indicating some components of a portable electronic communication device according to at least one embodiment of the invention;
Figures 4, 5A and 5B are schematic block diagrams illustrating a graphical user interface and user interaction according to a first embodiment of the invention; and
Figures 6 to 7 are schematic block diagrams illustrating a graphical user interface and user interaction according to a second embodiment of the invention; and
Figure 8 is a schematic block diagram illustrating a graphical user interface according to a third embodiment of the invention.

### Detailed description

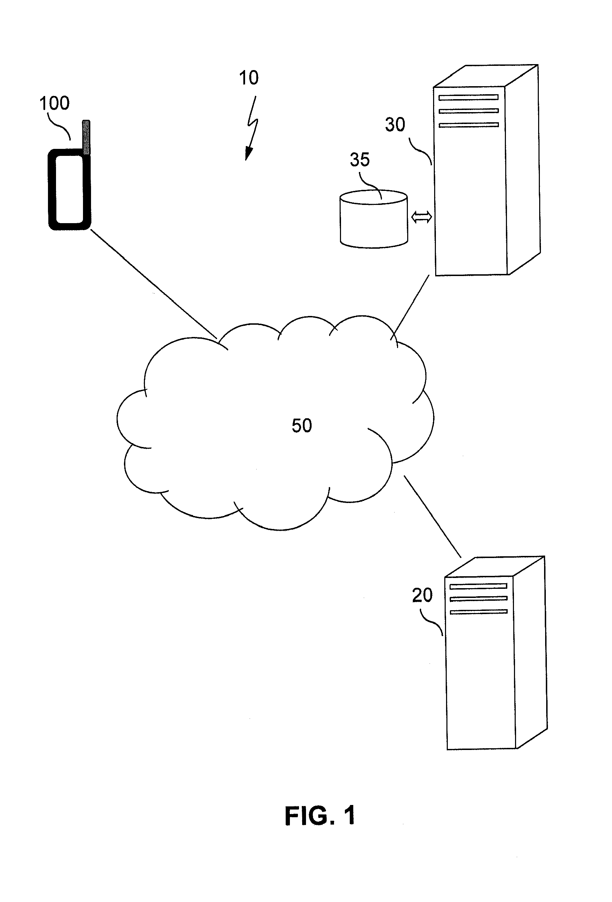

Embodiments of the invention will be described with reference to the Figures 1 to 8.

Figure 1 illustrates some of the main components of a data communication system 10 in which one or more embodiments of the invention may be implemented. The system 10 includes a data communication network 50 which is connectable to an electronic device 100 configured to implement a method according to one or more embodiments of the invention, an application provider server 20 as well as a service provider server 30 and database 35.

The electronic device may be a portable electronic communication device 100 configured to communicate with remote devices such as the application provider server 20 and the service provider server 30 by means of the data communication network 50. The data communication network 50 may be a wireless network such as a 3G type network, may comprise a combination of fixed and wireless networks.

Application provider server 20 is configured to exchange data with an associated application executing on portable electronic communication device 100. The service provider server 30 is configured to communicate with the application provider server for the management of financial transactions related to the application and accesses data concerning user profiles and financial data stored in database 35. The application provider server 20 and the service provider server 30 may communicate with one another by means of fixed and/or wireless networks.

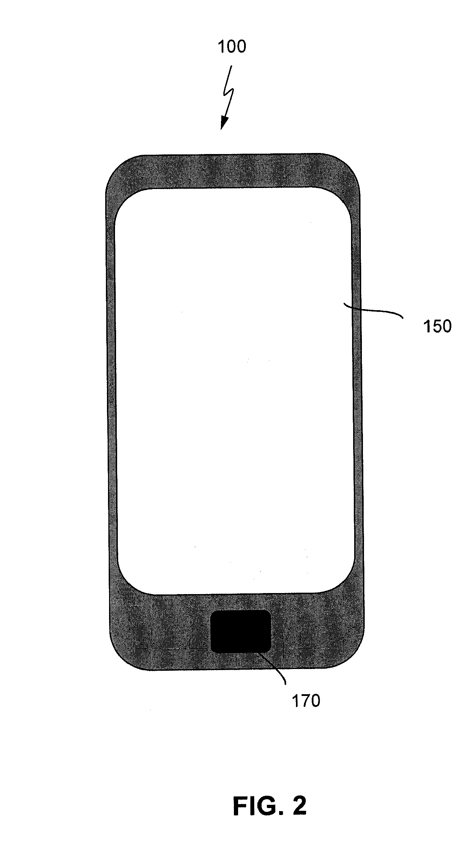

Figure 2 schematically illustrates a non-limiting example of an electronic device 100 according to an embodiment of the invention. The electronic device 100 is a wireless communication device and operates as a portable multifunction device supporting a range of applications such as a telephony application, instant messaging applications such as a short message service (SMS) application, multimedia message service (MMS) and internet based message exchange services; an email application, a web browsing application a social networking application, a digital camera application, a digital music and/or video player application, a geographical locating application. The portable electronic communication device 100 comprises a touch sensitive screen 150 provided with a graphical user interface (GUI) for enabling a user to operate the applications of the portable electronic communication device 100, as well as various physical buttons 170 such as a home or menu button or an on/off control button.

The touch sensitive screen arrangement 150 (referred to hereafter as touch screen) is provided with a touch sensitive surface operatively connected with a sensor or a plurality of sensors that detect user contact with the touch sensitive screen and provide signals indicative of user contact gestures on the screen based on haptic and/or tactile contact. The touch screen 150 may be configured for single and/or multipoint sensing. The touch screen 150 with a contact processor 152 enable detection of a user contact with the screen and the conversion of the detected contact into a user interaction signal for controlling an application. Examples of touch screen technology include liquid crystal displays (LCD), Light Emitting Polymer display (LPD) for example. It will be appreciated that any suitable touch screen technology enabling user contact with the surface of the screen 150 to be detected and converted into an exploitable signal may be used, for example touch sensing technologies based on capacitive, resistive, infrared, surface acoustic wave technology, pressure sensing, optical sensing proximity sensor arrays etc.

The user contact gesture or event detected may include direct user contact with the touch screen 150 by a digit (finger or thumb) gesture of the user such as finger contact, removal of finger contact, an opening or closing pinch gesture, a swipe gesture, a slide gesture, a tap gesture, a tap and hold gesture, a drag gesture, a pull gesture etc. In some embodiments more accurate stylus based user contact may be used.

The graphical user interface includes user interface objects displayed on the touch sensitive screen 150 which may include objects in the form of icons or images representing the various applications executable on the portable electronic device 150. These displayed objects may be manipulated by the user manipulations mentioned above. Other user interface objects include keypads such as soft keyboards enabling a user to input characters including letters, symbols and numbers for execution of applications, soft control pads for providing control, windows, menus, cursors, scroll bars, dialogue boxes etc.

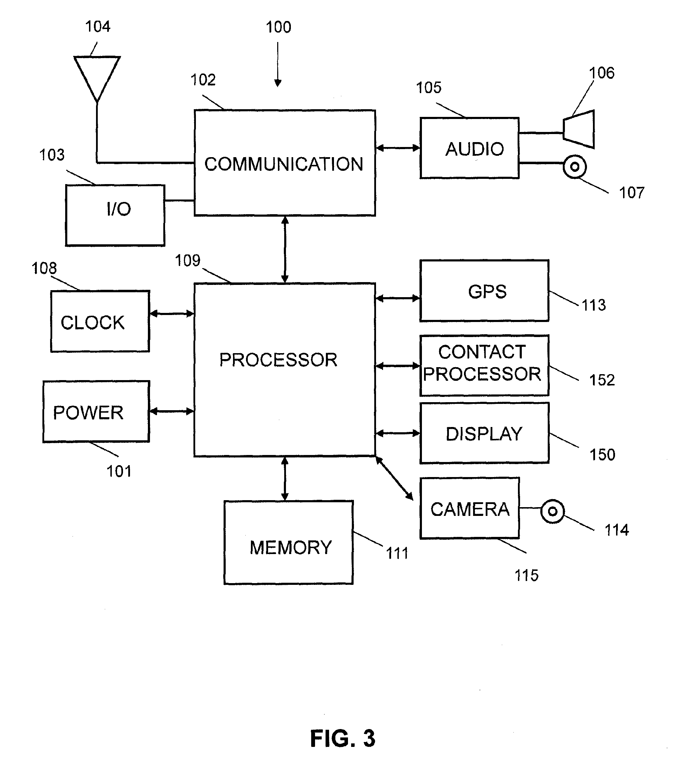

Figure 3 illustrates some of the main components of the portable electronic communication device 100 including a power system 101 for powering the various components of the device. The power system 101 may include one or more power sources, such as for example a rechargeable battery and a power management module. The power management module may include a power failure detection circuit, a power converter or inverter, a power status indicator and any other suitable component for the generation, management and distribution of power in a portable electronic communication device.

The portable electronic communication device 100 further includes a communication module 102 for enabling communication with one or more external devices by means of one or more external input/output (I/O) ports 103 and an antenna assembly 104 provided with RF circuitry for the transmission and reception of wireless RF signals. The I/O port may be for example a universal serial bus (USB) type port or any other type of port enabling the portable electronic communication device 100 to be connected to one or more external devices

The portable electronic communication device 100 also includes audio circuitry 105 provided with a speaker 106 and a microphone 107 for providing telephony communication functions; a clock 108. In some embodiments the device may be provided with optional features such as a digital camera 115 provided with an image sensor 114 for capturing still and/or video images and a global positioning system (GPS) 113 for determining location of the device. At least one memory 111 is provided for storing software code of applications executable on the portable electronic communication device 100 and data for use by the portable electronic communication device 100. By way of example the memory 111 may include one or more memory circuits including non-volatile memory circuits (EEPROM, FLASH etc.), Read only Memory (ROM), Random Access memory (RAM), hard disk drive or the like.

Contact processor 152 is operatively coupled to the touch screen 150 to detect user contact with the touch screen 150 and perform a function related to user contact with the touch screen 150 such as detecting if contact has occurred, where contact has occurred, if contact has occurred and been removed, if there has been movement of the contact across the screen etc in order to determine user contact gestures as mentioned above such as user digit contact, removal of user digit contact, an opening or closing pinch gesture, a swipe gesture, a slide gesture, a tap gesture, a tap and hold gesture, a drag gesture etc.

The portable electronic communication device may include one or more application modules 153 or instructions stored as program code in memory 111 for providing a variety of functions. Such modules may include an operating system, a graphics module for rendering and displaying graphics on the touch screen 150, a text input module for providing soft key boards on the touch screen 150 for entering text, an email client module, an instant messaging (IM) module for transmitting instant messages such as telephony based messages including Short Message Service (SMS) messages, or Multi Media Service messages (MMS) or internet based instant messages; a music and/or video player module, an internet browser module, widget modules and other such modules for providing functions of a multi-function portable electronic device. The portable electronic communication device 100 is provided, in use, with a Subscriber Identity Module SIM card (not shown) for identification. The applications of the portable electronic communication device 100 are executed by processor 109.

While in the non-limiting example illustrated in Figures 2 and 3 the portable electronic communication device 100 is a wireless multifunction mobile telephone, often referred to as a smart phone, it will be appreciated that the portable electronic communication device may be any type of electronic processing device such as a personal digital assistant, portable laptop, a fixed computer terminal, a game console etc.

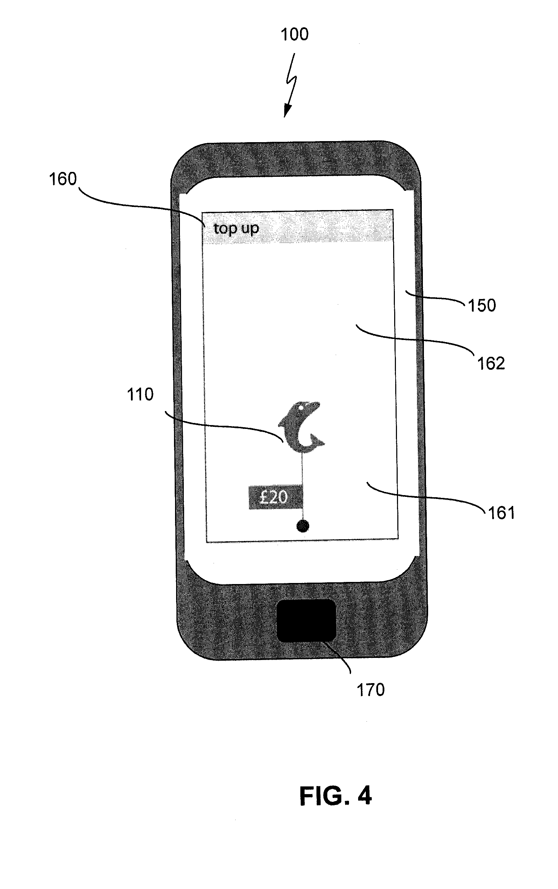

A method, according to a first embodiment, of validating a user command for controlling an application executing on the portable electronic communication device 100 will now be described with reference to Figures 4 to 5.

With reference to Figure 4 a graphical user interface 160 associated with an application executing on the portable electronic communication device 100 is displayed on the touch screen 150 of the portable electronic communication device 100. The application in this exemplary embodiment of the invention relates to an application for topping up credit on the telephone contract associated with the SIM card of the user. The graphical user interface (GUI) 160 includes a graphical object 110. The graphical object 110 in this particular embodiment takes the form of a balloon in the shape of a dolphin which has an attached string 115 with a label 116 displaying a monetary value, in this example 20 GBP, which represents the monetary value by which the user can top up the credit of his telephone account. Automatic movement of the graphical interface object 110 according to a predetermined movement along the touch screen 150 in a first direction D1 from a first region161 of the display screen 160 to a second region 162 of the screen 160 is initiated by a user contact gesture.

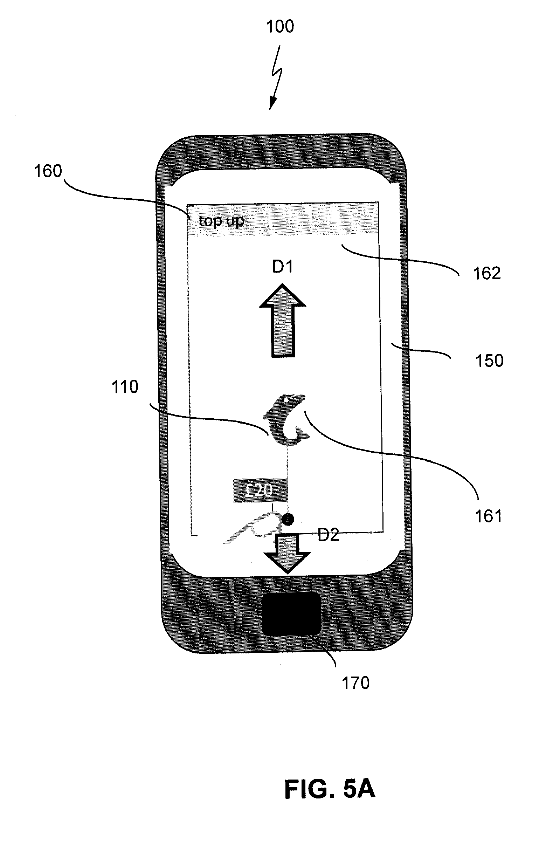

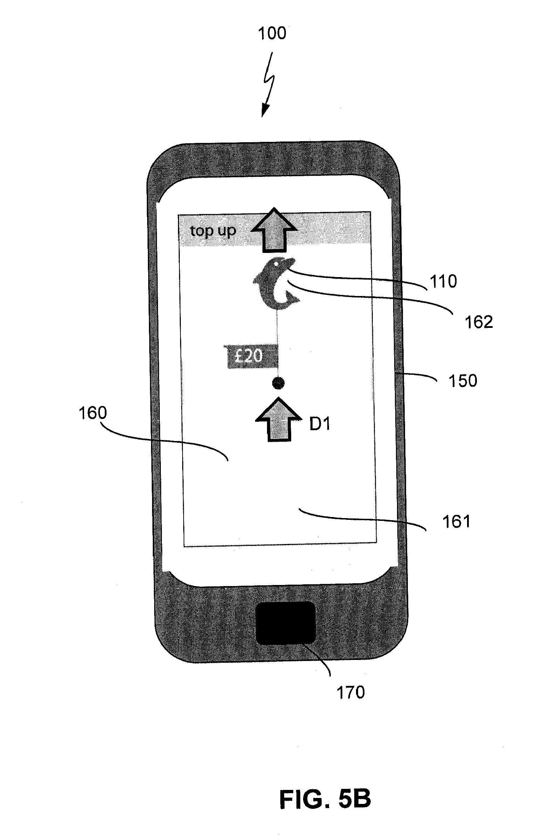

As illustrated in Figures 5A and 5B, a user digit (finger or thumb) applies a vertical pull down swipe gesture to the end of the string 115 in a second direction D2, opposite to the first direction D1 of automatic movement of the graphical object 110, moving the end of the string along a predetermined pull distance in direction D2. Once the vertical pull down gesture along the predetermined pull distance is completed and user contact with the graphical object 110 is released the graphical object 110 begins to move according to the predetermined movement in the first direction D1. Once the graphical object 110 reaches predetermined region 162, or moves a predetermined distance, the user command of adding a monetary value of 20GBP to the account of the user is validated by the corresponding application module 153. In this case the application module 153 receives a signal from the contact processor 152 indicating a validation signal for execution of the application. Data is then transmitted by means of the communication module 102 to remote application server 20 when then communicates with service provider server 30 to enable the financial transaction to be performed. A message may then be displayed on the touch screen 150 by the graphical module to display a confirmation to the user. In some embodiments the second region corresponds to the end of the display screen in the first direction, and the graphical object disappears from the display screen 160 when it reaches the end of the display screen 160 such that it is no longer visible on the display screen 160.

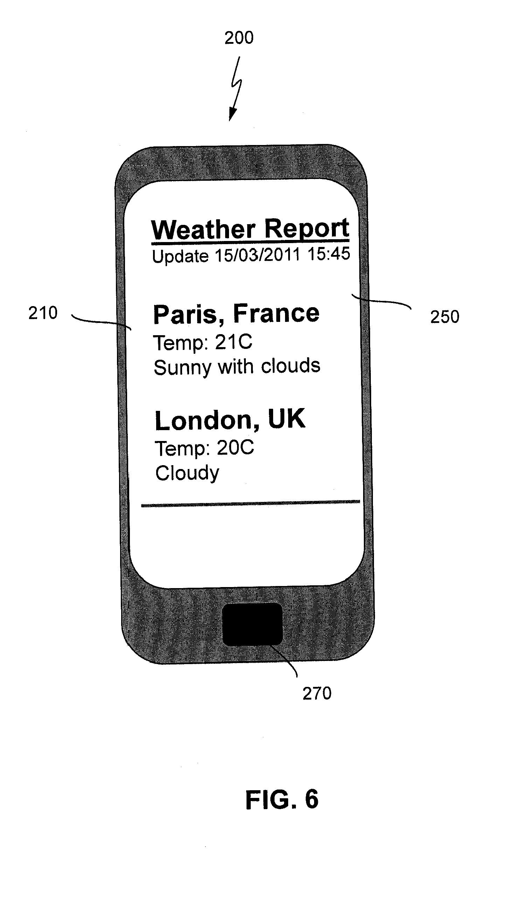

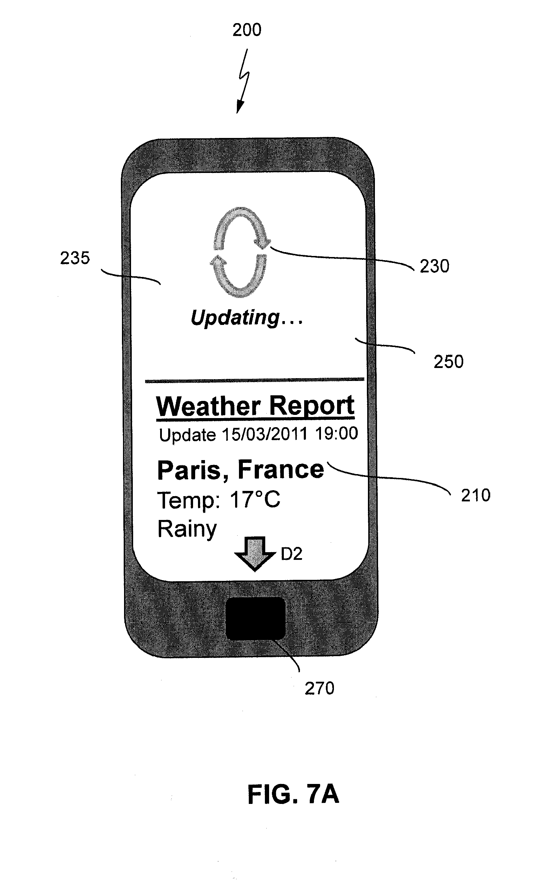

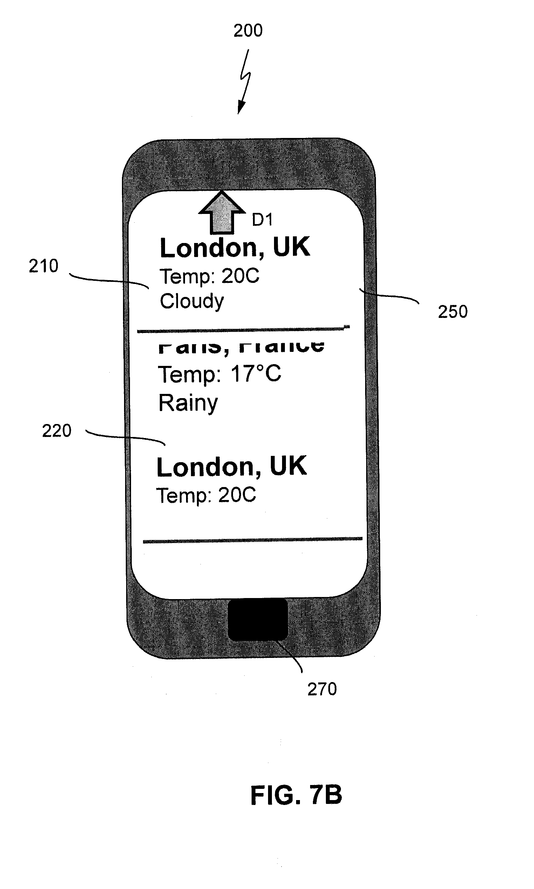

A method, according to a second embodiment, of validating a user command for controlling an application executing on the portable electronic communication device 100 will now be described with reference to Figures 6, 7A and 7B.

With reference to Figure 6 a graphical user interface 260 associated with an application executing on the portable electronic communication device 200 is displayed on the touch screen 250 of the portable electronic communication device 200. The application in this exemplary embodiment of the invention relates to a web page application displaying information received via the Internet. The graphical user interface (GUI) 260 includes a graphical object 210. The graphical object 210 in this particular embodiment takes the form of a web page displaying data content. Refreshing data content of the web page 210 is initiated by a user contact gesture which in this particular embodiment is a pull down gesture on the web page 210.

As illustrated in Figure 7A, a user digit (finger or thumb) applies a pull down swipe gesture in a vertical direction D2 moving the web page 210 down a predetermined distance. As the pull down swipe gesture is performed the web page 210 is moved downwards to generate a space portion 235 in which an update icon 230 representative of the status of execution of the user command is displayed - in this embodiment the icon relates to the status of reception of the updated data content or status of connection with an external server.

Once the pull down swipe gesture is completed and contact with the web page 210 is released, the web page 210 begins to scroll automatically in a vertical upwards direction D1 opposite to the vertical downwards direction D2 used to initiate the automatic movement of the web page indicating that the user command has being validated. As a consequence the user command of updating the web page content is executed by the corresponding application module 153. In this case the application module 153 receives a signal from the contact processor 152 indicating a validation signal. Data is transmitted by means of the communication module 102 to remote application server 20 to enable updated data content to be transmitted to the portable device from the application server 20. In some embodiments the remote application server 20 may communicate with service provider server 30 to enable the data content to be transmitted, in the case for example that reception of the data content requires payment.

With reference to Figure 7B as the web page 210 moves upwards to the upper end of the display screen 250, it uncovers an underlying web page 220 displaying the updated information content.

In some embodiments the user data refresh command is validated once the web page 210 has moved a predetermined distance in the first direction. In other embodiments the user data refresh command is validated once the web page 210 reaches a predetermined region of the screen 250.

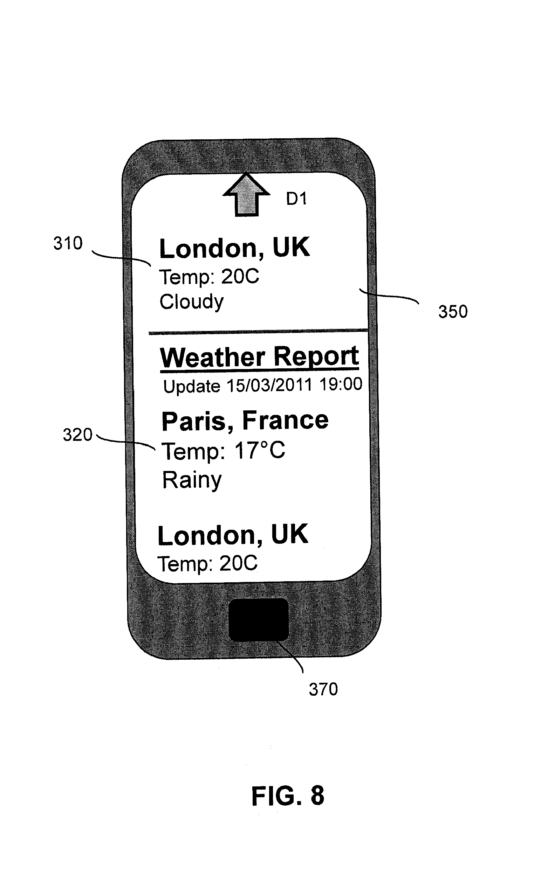

An alternative embodiment is illustrated in Figure 8 in which as the web page 310 moves upwards to the upper end of the display screen 350, a second web page 320 appears as an extension of the first web page 310 and appears to move up the screen 350 to be viewed on the screen 350 until it replaces the first web page 310.

Although the present invention has been described hereinabove with reference to specific embodiments, the present invention is not limited to the specific embodiments, and modifications will be apparent to a skilled person in the art which lie within the scope of the present invention.

For instance, while the foregoing examples have been explained with respect to an application for topping up credit to operate the portable electronic communication device for communication purposes or to the updating of information content on web pages it will be appreciated that the method may be applied to other executable applications, such as for example sending an email. In such an example the graphical object may represent an envelope and a user contact pull gesture may be applied to initiate movement of the envelop across the screen representative of a path towards the recipient of the email. Other applications may be envisaged, in particular applications which execute solely on the electronic portable communication device 100 and which do not require communication with a remote server or other device.

Moreover, while the previous embodiments have been described with respect to user digit contact manipulation of a touch screen type display, it will be appreciated that in further embodiments of the invention the graphical objects may be controlled with a stylus type device on a touch sensitive screen or by a user control device of the portable electronic device separate to the screen itself such as a joystick type control, a control wheel, track ball etc. It will also be appreciated that the predefined movement or the contact gestures may be in any direction across the screen.

The method and devices according to embodiments of the invention help facilitate user interaction and to enhance user experience for execution of user commands. Moreover, a more secure form of validation may be implemented.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. An electronic device comprising:
a display screen;
a graphical user interface displayed on the display screen and comprising:
a graphical object automatically movable, in accordance with a predefined movement, along at least part of the display screen, wherein the automatic movement of the graphical object is triggered in response to a user input;
the predefined movement being such that the graphical object is translated in a first direction along the display screen from a first region of the display screen to a second region of the display screen, and movement from the first region to the second region is indicative of a user command being validated;
the device further comprising:
sensor means configured to detect the movement of the graphical object from the first region to the second region; and
an application processor configured to execute the user command in response to detection of the movement of the graphical object from the first region to the second region.

2. An electronic device according to claim 1 wherein the sensor means is configured to detect the graphical object reaching the second region.

3. An electronic device according to claim 1 wherein the sensor means is configured to detect the distance of movement of the graphical object.

4. An electronic device according to any preceding claim wherein the display screen is a touch sensitive display operable to detect one or more user contact gestures with the surface of the touch screen display and the graphical object is a user interface graphical object wherein the sensor means is configured to detect a user contact gesture of a region of the display screen corresponding to the graphical interface object to trigger the automatic movement of the graphical object.

5. An electronic device according to claim 4 wherein the sensor means is configured to detect a user drag gesture along the display screen in a second direction opposite to the first direction to trigger the automatic movement of the graphical interface object in the first direction.

6. An electronic device according to claim 5 wherein the sensor means is configured to detect a user drag gesture of the graphical object in the second direction along a predetermined distance.

7. An electronic device according to any preceding claim wherein the graphical interface comprises a second graphical object which appears on the display in response to the automatic movement of the graphical object, the second graphical object being displayed such that more of the second graphical object is visible on the display screen as the first graphical object moves in the first direction.

8. An electronic device according to claim 7 wherein the second graphical object is displayed such that it appears to underlie the first graphical object

9. An electronic device according to any preceding claim wherein the automatic movement of the graphical object creates a space portion on the display screen displaying a further graphical object representative of the state of execution of the user command.

10. An electronic device according to any preceding claim wherein the graphical object is a web page displaying data content, the user command being a refresh command to refresh the data content of the web page.

11. An electronic device according to claim 10, when appended to claim 7, 8 or 9, wherein the second graphical object is representative of a web page displaying the updated data content.

12. An electronic device according to any preceding claim wherein the application processor is configured to enable wireless transmission, by means of a communication interface, of data representative of the user command from the portable electronic device to a remote server once validation of the command has been detected

13. A computer implemented method for validating a user command for controlling an application, the method comprising
displaying on a display screen of an electronic device a graphical user interface comprising a graphical object automatically movable, in accordance with a predefined movement, along at least part of the display screen,
triggering the automatic movement of the graphical object in response to a user input, the predefined movement being such that the graphical object is translated in a first direction along the display screen from a first region of the display screen to a second region of the display screen, and movement from the first region to the second region is indicative of a user command being validated;
detecting the movement of the graphical object from the first region to the second region; and
executing the user command in response to detection of the movement of the graphical object from the first region to the second region.

14. A method according to claim 13 wherein the display screen is a touch sensitive display operable to detect one or more user contact gestures with the surface of the touch screen display and, the method comprises detecting a user contact gesture of a region of the display screen corresponding to the graphical interface object to trigger the automatic movement of the graphical object, the user contact gesture being a user drag gesture along the display screen in a second direction opposite to the first direction.

15. A computer program product for a data-processing device, the computer program product comprising a set of instructions which, when loaded into the data-processing device, causes the device to perform the steps of the method as claimed in claim 13 or 14.
